# EUROPEAN PATENT SPECIFICATION

(11) **EP 1 518 751 B1**
(45) Date of publication and mention of the grant of the patent: **19.07.2006**
(21) Application number: 04021758.0
(22) Date of filing: 14.09.2004
(51) Int. Cl.: B60P 3/077

(54) **Chock equipped with holding means for vehicle wheels**
Arretierkeil mit Haltemittel für Fahrzeugräder
Cale avec des moyens de retenue pour roues d'un véhicule

(30) Priority: 24.09.2003 IT TO20030732
(43) Date of publication of application: 30.03.2005
(73) Proprietor: ROLFO S.p.A., I-12042 Bra (Cuneo) (IT)
(72) Inventor: Rolfo, Dario, 12042 Bra (CN) (IT)
(74) Representative: Garavelli, Paolo

(56) References cited:
- EP-A- 1 038 725
- EP-A- 1 384 620
- DE-C- 313 311
- FR-A- 2 684 054
- US-A- 4 955 459
- US-A- 5 988 402
- US-B1- 6 755 599

## Description

The present invention refers to a chock equipped with holding means for vehicle wheels, in particular adjustable holding means for motor vehicle tires.

Numerous types of vehicles are known, particularly trucks, adapted to transport other vehicles, particularly cars, tractors and motorcycles. In order to perform such transport, with the aim of immovably secure the transported vehicles, bearing chocks are commonly provided for vehicle wheels, that are secured to the transport flatbed in variable positions according to the transported load.

While such chocks are satisfactory for holding vehicles with relatively big sizes such as cars, etc., they do not provide the same lateral hold for vehicles with lower sizes, such as motorcycles. For this reason, the nowadays existing chocks are not used in practice for transporting motorcycles, that are placed on the bearing flatbed on their own stand and are secured to the flatbed itself through belts and tie-rods in all directions where they could move during their transport. This arrangement, however, does not provide an optimum lateral hold (with respect to the running direction of the transporting vehicle) to the wheels of the motorcycles themselves.

US-A-5 988 402 discloses a stand for motorcycles according to the preamble of Claim 1.

FR-A-2 684 054 discloses a device for clamping car wheels to be secured to the plane of a vehicle for transporting cars.

US-B-6 755 599 discloses a recessed wheel chock for motorcycle wheels.

Object of the present invention is solving the above prior-art problems, by providing a chock equipped with means for laterally holding (with respect to the running direction of the transporting vehicle) the wheels of the transported vehicles.

A further object of the present invention is providing a chock as stated above that performs a very efficient hold, being its own holding means adjustable in order to suit any type and size of wheel; moreover, such holding means grip the tire and not the wheel rim, without thereby damaging this latter one during its transport.

A further object of the present invention is providing a chock as stated above that can be easily realised, allows a wide application flexibility and in which the holding means can be applied both to newly-manufactured chocks and to existing chocks, of the fixed and overturnable types.

The above and other objects and advantages of the invention, as will appear from the following description, are obtained by a chock as claimed in Claim 1. Preferred embodiments and non-trivial variations of the present invention are claimed in the dependent Claims.

The present invention will be better described by some preferred embodiments thereof, given as a non-limiting example, with reference to the enclosed drawings, in which:
- Figure 1 is a front view of a first embodiment of the holding means and the chock according to the present invention;
- Figure 2 is a sectional view performed along line II-II in Fig. 1;
- Figures 3 to 5 are perspective views from different angles of a second embodiment of the holding means and the chock according to the present invention, in which the holding means are shown in a position one far away from the other; and
- Figures 6 to 8 are perspective views from different angles of the second embodiment of the holding means and the chock according to the present invention, in which the holding means are shown in a mutually approached position.

With reference to the Figures, a preferred embodiment of the chock of the present invention is shown and described. It will be immediately obvious that numerous variations and modifications can be performed to the described chock (for example related to shape, sizes, arrangements and parts with equivalent functionalities) without departing from the scope of the invention as appears from the enclosed claims. The chock will be described herein below as applied to motorcycle wheels, but it will be readily obvious that its lateral holding features can be used in the same efficient way also for the wheels of any transported vehicle.

The chock 1 of the invention, that is adapted in particular to be mounted on flatbeds of vehicles for transporting vehicles, has as its major characteristic that of being equipped with holding means for the wheels 20 of the transported vehicles. In particular, the transported vehicles can be motorcycles, and the holding means are adjustable means for catching the tires 20 of the motorcycles.

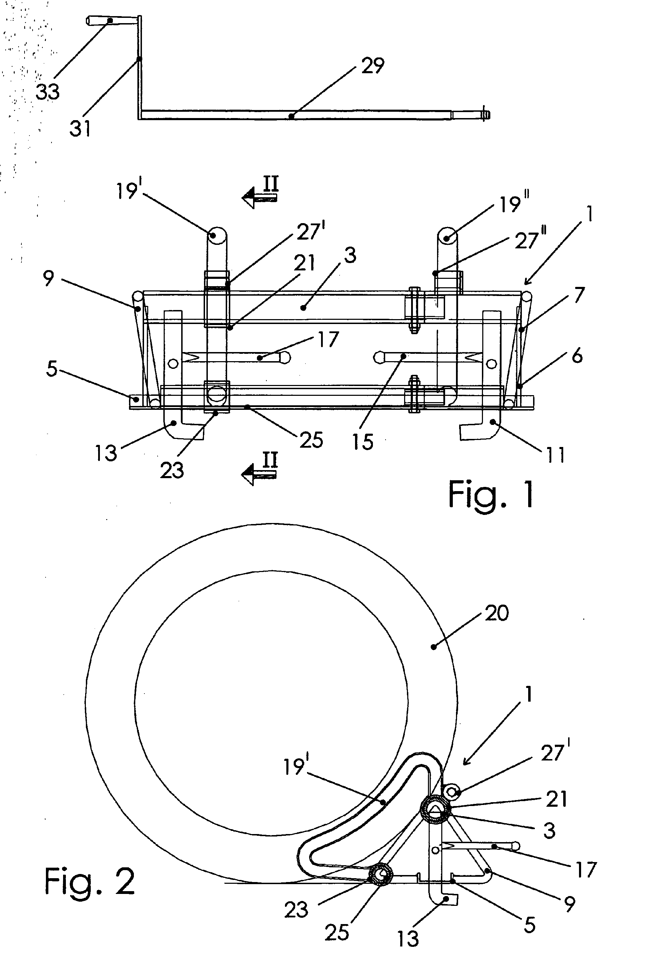

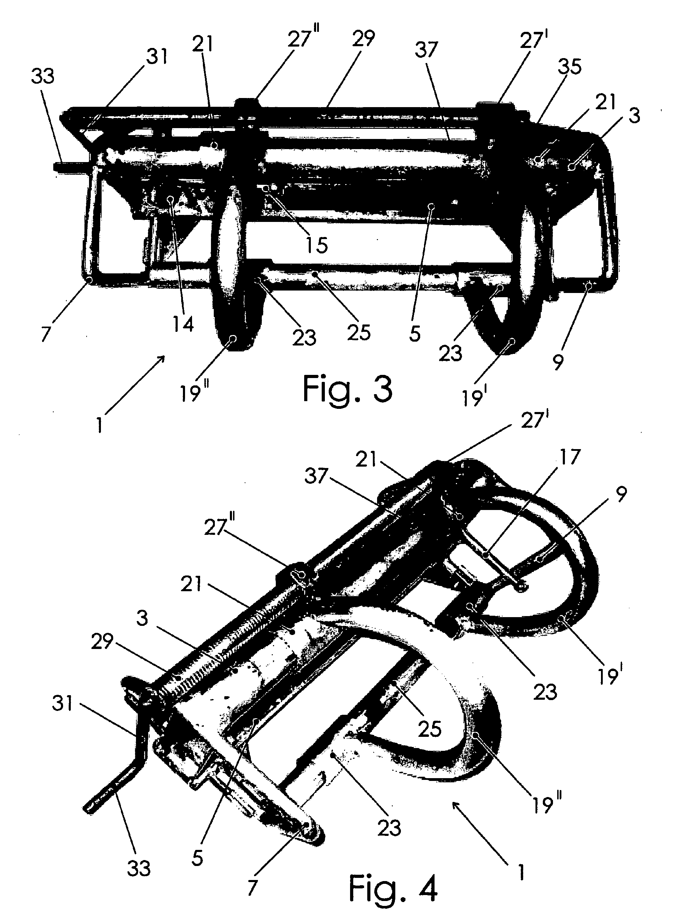

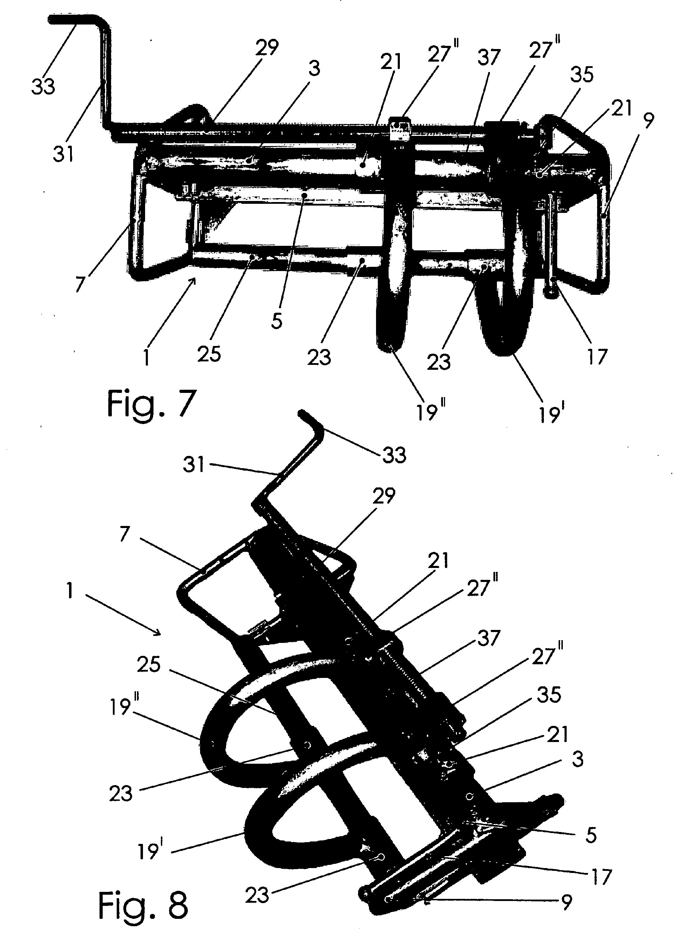

The holding means can assume various shapes and configurations, two of which are shown, as a non-limiting example, respectively in Fig. 1-2 and in Fig. 3-8, according to the sizes and shapes of the tires to be clamped.

In particular, the drawing Figures show a preferred, but not limiting, example of a practical embodiment of the chock 1 of the invention. According to what is shown, the chock 1 comprises, first of all, in a known way, an elongated tubular member 3, that is used for resting the wheels 20: such elongated tubular member 3 is connected, through small rods 6, to a base member 5 to be rested onto the flatbed (not shown) and is equipped with side shoulders 7, 9 and with securing means 11, 13 to the flatbed of the transporting vehicle.

In a known way, such securing means 11, 13 are composed of an elongated pin (to be inserted into corresponding slots of the flatbed) equipped with a projection for clamping the flatbed bottom, and equipped with respective tightening and loosening levers 15, 17 that operate against the thrust of springs 16 in order to secure and keep the chock 1 clamped to the flatbed.

As shown, such chock 1 is equipped with holding means for the wheels 20 that are composed of:
- at least two clamping jaws 19', 19" adapted to mutually slidingly cooperate along the vehicle wheel 20 axis in order to clamp and laterally hold the wheel 20; and
- means 29, 31, 33 for adjusting the mutual distance between the jaws 19', 19".

In particular, such clamping jaws 19', 19" (in the preferred embodiment two of them are shown) are equipped at a first end with respective first sliding rings 21 fitted over and adapted to slide along the elongated tubular bearing member 3, and are equipped at a second end with respective second sliding rings 23 fitted over and adapted to slide along an elongated tubular sliding member 25 parallel with the elongated tubular bearing member 3 and connected to the shoulders 7, 9 of the chock 1.

Moreover, the clamping jaws 19', 19" are each equipped with a respective nut 27', 27" adapted to connect them to the adjusting means 29, 31, 33 in order to allow the adjusting means 29, 31, 33 themselves to control the mutual approaching and going away movement of the jaws 19', 19" through the nuts 27', 27".

According to the preferred embodiment shown, the adjusting means 29, 31, 33 are composed of an elongated screw 29 rotatingly driven by a handle equipped with a grip 33 connected therewith through a small rod 31. The screw 29 extends parallel with the elongated members 3 and 25, for a length that is substantially equal to the one of such elongated members 3, 25.

Even if both jaws 19', 19" could slidingly move in order to clamp the wheel 20 (for example by providing the screw 29 with opposite oriented threads and adequate adjusting means), the embodiment shown provides that one (for example, 19') of the clamping jaws 19', 19" is fixed and that the nut 27' of the jaw 19' is immovably connected to the adjusting means 29, 31, 33, while the other one (for example 19") of the clamping jaws 19', 19" is movable and is adapted to approach and move away from the fixed jaw 19'.

According to another embodiment, as shown, the fixed jaw 19' can be adjustable in its securing position. For this purpose, the ring 21 of the fixed jaw 19' is equipped with a hole (not shown) that is made correspond to one of respective holes 37 obtained in the elongated bearing member 3 of the chock 1 in order to secure the fixed jaw 19' to the elongated bearing member 3 through a pin 35 that is adapted to penetrate into the two respective coupled holes.

The operation of the chock 1 according to the present invention will now be described.

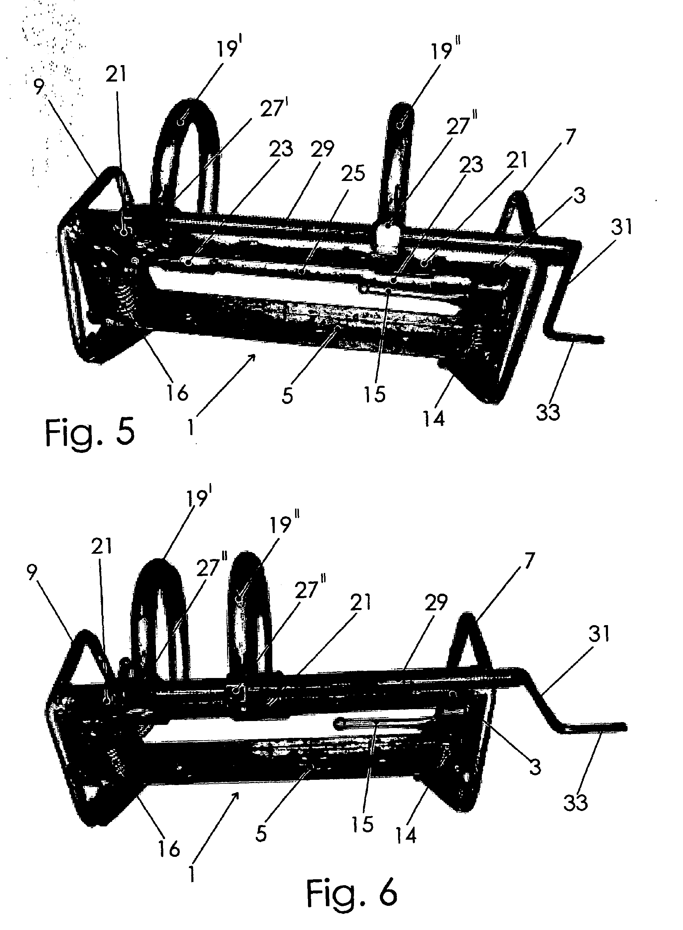

After having fitted the chock 1 onto the flatbed by operating on the securing means 11, 13 through the levers 15, 17, the vehicle wheel 20 is rested onto the member 3 and the fixed jaw 19' (with the chock 1 arranged as shown, for example, in Figures 3 to 5) and then the handle grip 33 is operated, making it turn and making then the movable jaw 19" slide transversally till it clamps the wheel 20 tire (where the jaws 19', 19" of the chock 1 assume, for example, the position shown in Figures 6 to 8).

The vehicle clamping to the flatbed is then completed through common known means, such as belts, tie-rods, etc. A lateral hold is thereby guaranteed (with respect to the running direction of the transporting vehicle) for the vehicle wheels 20 that is very efficient.

Obviously, in order to unload the vehicle at the end of its transport, operations are performed that are the reverse of the above-described ones.

Some preferred embodiments of the present invention have been previously shown and described: obviously, numerous modifications and variations, functionally equivalent to the previous ones, will readily appear to the skilled people in the art and will fall within the scope of the invention as pointed out by the enclosed claims. For example, the chock 1 can be of the type that is able to be overturned and is able to disappear below the flatbed, and the flatbed of the transporting vehicles on which the chock 1 is secured is equipped with respective housings for containing the wheel 20 holding means when the chock 1 is in its disappeared position below the flatbed.

## Claims

1. Chock (1) adapted to be mounted on vehicles for transporting vehicles and adapted to bear thereon wheels (20) of transported vehicles, said chock (1) being equipped with holding means for the wheels (20) of the transported vehicles, said chock (1) comprising an elongated tubular member (3) for resting the wheels (20), said elongated tubular member (3) being connected, through small rods (6), to a base member (5) and being equipped with side shoulders (7, 9) and with securing means (11, 13) to a flatbed of the transporting vehicle, **characterised in that** said holding means are composed of:
- at least two clamping jaws (19', 19") adapted to mutually slidingly cooperate along the vehicle wheel (20) axis in order to clamp and laterally hold the wheel (20); and
- means (29, 31, 33) for adjusting the mutual distance between said jaws (19', 19");
- said at least two clamping jaws (19', 19") being equipped at a first end with respective first sliding rings (21) fitted over and adapted to slide along said elongated tubular bearing member (3), and being equipped at a second end with respective second sliding rings (23) fitted over and adapted to slide along an elongated tubular sliding member (25) parallel with said elongated tubular bearing member (3) and connected to said shoulders (7, 9) of said chock (1).

2. Chock (1) according to claim 1, **characterised in that** said holding means are adjustable means for catching the tires (20) of the transported vehicles.

3. Chock (1) according to claim 1 or 2, **characterised in that** said transported vehicles are motorcycles.

4. Chock (1) according to claim 1, **characterised in that** said at least two clamping jaws (19', 19") are shaped in order to clamp the tire (20) without nicking and damaging the wheel rim.

5. Chock (1) according to any one of the previous claims, **characterised in that** said at least two clamping jaws (19', 19") are each equipped with a respective nut (27', 27") adapted to connect them to said adjusting means (29, 31, 33) in order to allow said adjusting means (29, 31, 33) to control the mutual approaching and going away movement of said jaws (19', 19") through said nuts (27', 27").

6. Chock (1) according to any one of the previous claims, **characterised in that** said adjusting means (29, 31, 33) are composed of an elongated screw (29) rotatingly driven by a handle equipped with a grip (33) connected therewith through a small rod (31).

7. Chock (1) according to claims 5 or 6, **characterised in that** one (19') of said clamping jaws (19', 19") is fixed, said nut (27') of said jaw (19') being immovably connected to said adjusting means (29, 31, 33), while another one (19") of said clamping jaws (19', 19") is movable and is adapted to approach and move away from said fixed jaw (19').

8. Chock (1) according to claim 7, **characterised in that** said fixed jaw (19') is adjustable in its securing position.

9. Chock (1) according to claim 8, **characterised in that** the ring (21) of said fixed jaw (19') is equipped with a hole that is made correspond to one of respective holes (37) obtained in said elongated bearing member (3) of said chock (1) in order to secure said fixed jaw (19') to said elongated bearing member (3) through a pin (35) that is adapted to penetrate into the two respective coupled holes.

10. Chock (1) according to any one of claims 1 to 6, **characterised in that** said clamping jaws (19', 19") are both movable and transversally sliding with respect to the running direction of the transporting vehicle, along mutually opposite directions, through an adjusting screw (29) equipped with threads with opposite orientations.

11. Chock (1) according to any one of the previous claims, **characterised in that** said securing means (11, 13) are equipped with holding springs (16) and respective tightening and loosening levers (15, 17).

12. Chock (1) according to any one of the previous claims, **characterised in that** said chock (1) is of a type that is able to be overturned and is able to disappear below the flatbed, the flatbed of said transporting vehicles on which the chock is secured being equipped with a housing for containing said wheel (20) holding means when said chock (1) is in its disappeared position below the flatbed.

## Patentansprüche

1. Keil (1) für die Montage auf Fahrzeugen für den Fahrzeugtransport und das Aufstützen der Räder (20) der transportierten Fahrzeuge. Dieser Keil (1) ist mit Haltemitteln für die Räder (20) der transportierten Fahrzeuge ausgestattet. Dieser Keil (1) enthält ein verlängertes rohrförmiges Stützelement (3) für die Räder (20). Dieses verlängerte rohrförmige Element (3) ist durch Stäbe (6) mit einem Basiselement (5) verbunden und mit seitlichen Schultern (7, 9) und Befestigungsvorrichtungen (11, 13) an einer Ladefläche des Transportfahrzeuges ausgestattet. Die Haltemittel sind **dadurch gekennzeichnet, dass** sie folgendes enthalten:
- mindestens zwei Spannbacken (19', 19"), die zusammenarbeiten und entlang der Radachse (20) des Fahrzeuges verschoben werden, um den Eingriff und die seitlichen Befestigungen des Rades (20) auszuführen; und
- die Vorrichtungen (29, 31, 33) für die Einstellung des Abstandes zwischen den Spannbacken (19', 19");
- Diese mindestens zwei Spannbacken (19', 19") sind an einem ersten Endstück mit entsprechenden ersten Laufringen (21) ausgestattet, die aufgezogen sind und dazu dienen, am verlängerten rohrförmigen Stützelement (3) entlangzulaufen, und an einem zweiten Endstück mit entsprechenden zweiten Laufringen (23) ausgestattet, die aufgezogen sind und dazu dienen, am verlängerten rohrförmigen Laufelement (25) parallel zum verlängerten rohrförmigen Stützelement (3) entlangzulaufen und mit den Schultern (7, 9) des Keils (1) verbunden sind.

2. Keil (1) gemäß Patentanspruch 1, der **dadurch gekennzeichnet ist, dass** die Haltemittel für den Eingriff der Reifen (20) der transportierten Fahrzeuge regulierbar sind.

3. Keil (1) gemäß Patentanspruch 1 oder 2, der **dadurch gekennzeichnet ist, dass** die transportierten Fahrzeuge Motorfahrzeuge sind.

4. Keil (1) gemäß Patentanspruch 1, der **dadurch gekennzeichnet ist, dass** diese mindestens zwei Spannbacken (19', 19") so gebildet sind, dass sie auf dem Reifen (20) eingreifen, ohne die Radfelge anzugreifen oder zu beschädigen.

5. Keil (1) gemäß einem beliebigen der vorhergehenden Patentansprüche, der **dadurch gekennzeichnet ist, dass** mindestens zwei der Spannbacken (19', 19") jeweils mit einer entsprechenden Schraubenmutter (27', 27") ausgestattet sind, die dazu dient, sie mit den Einstellungsvorrichtungen (29, 31, 33) zu verbinden, damit diese Einstellungsvorrichtungen (29, 31, 33) die gegenseitige Entfernung und Annäherung der Spannbacken (19', 19") durch die Schraubenmuttern (27', 27") steuern können.

6. Keil (1) gemäß einem beliebigen der vorhergehenden Patentansprüche, der **dadurch gekennzeichnet ist, dass** die Einstellungsvorrichtungen (29, 31, 33) aus einer verlängerten Schraube (29) bestehen, die in der Drehung durch eine Kurbel gesteuert wird, die mit einem Griff (33) ausgestattet ist, mit dem sie durch einen Stab (31) verbunden ist.

7. Keil (1) gemäß Patentanspruch 5 oder 6, der **dadurch gekennzeichnet ist, dass** eine (19') der Spannbacken (19', 19") fest ist. Die Schraubenmutter (27') der Spannbacke (19') ist unbeweglich mit den Einstellungsvorrichtungen (29, 31, 33) verbunden, während eine andere (19") Spannbacke (19', 19") beweglich ist und dazu dient, sich der festen Spannbacke (19') zu nähern und sich von ihr zu entfernen.

8. Keil (1) gemäß Patentanspruch 7, der **dadurch gekennzeichnet ist, dass** die feste Spannbacke (19') in ihrer Befestigungsposition regulierbar ist.

9. Keil (1) gemäß Patentanspruch 8, der **dadurch gekennzeichnet ist, dass** der Ring (21) der festen Spannbacke (19') mit einem Loch ausgestattet ist, durch das er einem der entsprechenden Löcher (37) entspricht, die im verlängerten Stützelement (3) des Keils (1) angebracht sind, um die feste Spannbacke (19') an dem verlängerten Stützelement (3) mit einem Bolzen (35) zu befestigen, der die entsprechenden gepaarten Löcher durchdringt.

10. Keil (1) gemäß einem beliebigen der Patentansprüche von 1 bis 6, der **dadurch gekennzeichnet ist, dass** die Spannbacken (19', 19") beide beweglich sind und durch eine Stellschraube (29), die mit entgegengesetzt ausgerichtetem Gewinde ausgestattet ist, in transversaler Richtung gegenüber der Fahrtrichtung des Transportfahrzeuges verlaufen.

11. Keil (1) gemäß einem beliebigen der vorhergehenden Patentansprüche, der **dadurch gekennzeichnet ist, dass** die Befestigungsvorrichtungen (11, 13) mit Haltefedern (16) und entsprechenden Spann- und Entspannungshebeln (15, 17) ausgestattet sind.

12. Keil (1) gemäß einem beliebigen der vorhergehenden Patentansprüche, der **dadurch gekennzeichnet ist, dass** der Keil (1) umklappbar und versenkt ist. Die Ladefläche der Transportfahrzeuge, auf denen der Keil befestigt ist, ist mit einer Aufnahme für die Befestigung der Haltemittel für die Räder (20) ausgestattet, wenn sich der Keil (1) versenkt unter der Ladefläche befindet.

## Revendications

1. Cale (1) adaptée au montage sur un véhicule de transport de véhicules, conçue pour caler les roues (20) des véhicules transportés, cette cale (1) étant pourvue de moyens de retenue pour les roues (20) des véhicules transportés, cette cale (1) comprenant un élément tubulaire allongé (3) d'appui pour les roues (20), ledit élément tubulaire allongé (3) étant relié par des tiges (6) à un élément de base (5) et étant pourvu d'épaulements latéraux (7, 9) et de moyens de fixation (11, 13) à une plate-forme de véhicule de transport, **caractérisé en ce que** lesdits moyens de retenue sont constitués de:
- au moins deux mâchoires de prise (19', 19") capables de coopérer réciproquement en coulissant le long de l'axe de la roue (20) du véhicule pour effectuer la prise et la retenue latérale de la roue (20); et
- des moyens (29, 31, 33) de réglage de la distance réciproque entre lesdites mâchoires (19', 19");
- ces au moins deux mâchoires de prise (19', 19") étant pourvues d'une première extrémité de respectives premières bagues de coulissement (21) insérées dessus et capables de coulisser le long dudit élément tubulaire allongé d'appui (3) et étant pourvues à une seconde extrémité de respectives secondes bagues de coulissement (23) insérées dessus et capables de coulisser le long d'un élément tubulaire allongé (25) parallèle à l'élément tubulaire allongé d'appui (3) et relié aux épaulements (7, 9) de ladite cale (1).

2. Cale (1) selon la revendication 1, **caractérisée en ce que** lesdits moyens de retenue sont des moyens réglables pour la prise des pneumatiques (20) des véhicules transportés.

3. Cale (1) selon la revendication 1 ou 2, **caractérisée en ce que** lesdits véhicules transportés sont des motocycles.

4. Cale (1) selon la revendication 1, **caractérisée en ce que** lesdites au moins deux mâchoires de prise (19', 19") sont conformées de manière à faire prise sur le pneumatique (20) sans ébrécher ni endommager la jante de la roue.

5. Cale (1) selon une quelconque des revendications précédentes, **caractérisée en ce que** lesdites au moins deux mâchoires de prise (19', 19") sont chacune pourvues d'une écrou respectif (27', 27") pour les relier aux moyens de réglage (29, 31, 33) de manière à permettre aux moyens de réglage (29, 31, 33) de commander l'éloignement ou le rapprochement réciproque desdites mâchoires (19', 19") au moyen de ces écrous (27', 27").

6. Cale (1) selon une quelconque des revendications précédentes, **caractérisée en ce que** lesdits moyens de réglage (29, 31, 33) sont constitués d'une vis allongée (29) commandée en rotation par une manivelle avec une poignée (33) reliée à cette manivelle par une tige (31).

7. Cale (1) selon la revendication 5 ou 6, **caractérisée en ce qu'**une (19') desdites mâchoires de prise (19', 19") est fixe, ledit écrou (27') de ladite mâchoire (19') étant relié de façon inamovible aux moyens de réglage (29, 31, 33), alors que l'autre (19") desdites mâchoires de prise (19', 19") est mobile et capable de se rapprocher ou de s'éloigner de ladite mâchoire fixe (19').

8. Cale (1) selon la revendication 7, **caractérisée en ce que** ladite mâchoire fixe (19') est réglable dans sa position de fixation.

9. Cale (1) selon la revendication 8, **caractérisée en ce que** la bague (21) de ladite mâchoire fixe (19') possède un orifice à faire coïncider à un des respectifs orifices (37) pratiqués dans ledit élément allongé d'appui (3) de ladite cale (1) pour fixer ladite mâchoire fixe (19') à l'élément allongé d'appui (3) à travers un axe (35) pénétrant dans les deux respectifs orifices accouplés.

10. Cale (1) selon une quelconque des revendications de 1 à 6, **caractérisée en ce que** lesdites mâchoires de prise (19', 19") sont toutes deux mobiles et coulissantes dans le sens transversal par rapport au sens de marche du véhicule de transport, en directions réciproquement opposées, à travers une vis de réglage (29) possédant des filets d'orientation contraire.

11. Cale (1) selon une quelconque des revendications précédentes, **caractérisée en ce que** lesdits moyens de fixation (11, 13) possèdent des ressorts de retenue (16) et des respectifs leviers de serrage et de desserrage (15, 17).

12. Cale (1) selon une quelconque des revendications précédentes, **caractérisée en ce que** ladite cale (1) est du type basculant escamotable, la plate-forme desdits véhicules de transport sur laquelle est fixée la cale étant pourvue d'un logement pour contenir lesdits moyens de retenue des roues (20) quand la cale (1) se trouve en position escamotable au-dessous de la plate-forme.
